# EUROPEAN PATENT APPLICATION

(11) **EP 4 822 761 A1**
(43) Date of publication of application: **14.10.2026**
(21) Application number: 26171698.9
(22) Date of filing: 10.04.2026
(51) Int. Cl.: H01M 4/133, H01M 4/134, H01M 4/36, H01M 4/38, H01M 4/587, H01M 10/0525

(54) **NEGATIVE ELECTRODE FOR RECHARGEABLE BATTERY AND ELECTRODE ASSEMBLY INCLUDING THE SAME**

(30) Priority: 10.04.2025 KR 20250047058
(71) Applicant: SAMSUNG SDI CO., LTD., Yongin-si, Gyeonggi-do 17084 (KR)
(72) Inventor: CHAE, Wonhyung, 17084 Yongin-si, Gyeonggi-do (KR)
(74) Representative: Michalski Hüttermann & Partner mbB

(57) **Abstract**

An electrode includes a substrate, a first active material layer formed on the substrate, and a second active material layer formed on the first active material layer. A porosity of the first active material layer is greater than a porosity of the second active material layer.

## Description

### BACKGROUND

### 1. Field

The present disclosure relates to a negative electrode for a rechargeable battery, and an electrode assembly including the negative electrode.

### 2. Description of the Related Art

Demand for rechargeable batteries as energy sources is increasing in accordance with technology development for portable devices. Unlike primary batteries, rechargeable batteries are batteries that repeat charging and discharging.

Such a rechargeable battery may form a cylindrical type or jelly-roll shape electrode assembly by overlapping a positive electrode, a separator, and a negative electrode, and then winding the positive electrode, separator, and negative electrode, or may form a stacked electrode assembly formed by laminating the positive electrode, separator, and negative electrode after separating them into sheets.

Meanwhile, rechargeable batteries are required to be miniaturized and to have high capacity according to the development of electronic products. Although the capacity is being increased by adding silicon or the like, silicon has a large volume change during the charge and discharge process of the battery due to material characteristics.

As such, if (when) the contraction and expansion of the active material layer are large during the charge and discharge process, cracks or the like may occur in the active material layer, thereby not only degrading the performance of the rechargeable battery, but also increasing the risk of fire.

The above-mentioned information disclosed in this background technology is only for enhancing the understanding of the background of the present disclosure, and therefore may include information that does not constitute the prior art.

### SUMMARY

The present disclosure is to provide a negative electrode, and an electrode assembly including the negative electrode which, while increasing the capacity of a rechargeable battery, may reduce performance degradation of the rechargeable battery due to contraction and expansion.

An electrode according to one example embodiment of the present disclosure includes a substrate, a first active material layer formed on the substrate, and a second active material layer formed on the first active material layer, wherein a porosity of the first active material layer is greater than a porosity of the second active material layer.

The porosity of the first active material layer is in a range of about 15% to about 18%, and the porosity of the second active material layer may be in a range of about 10% to about 12%.

Each of, or at least one of, the first active material layer and the second active material layer may include a first active material in which artificial graphite and silicon particles are mixed together, and a second active material including natural graphite.

The ratio of the first active material to the second active material of the first active material layer may be different from the ratio of the first active material to the second active material of the second active material layer.

The first active material and the second active material of the first active material layer may be mixed in a ratio of about 25:75.

The particle size of the artificial graphite may be in a range of about 11 µm to about 15 µm.

The particle size of the natural graphite may be in a range of about 7 µm or less.

The particle size of the silicon particles may be in a range of about 20 µm or less.

The first active material layer may be formed with a mixture density in a range of about 1.60 g/cc to about 1.65 g/cc.

The first active material layer and the second active material layer may be oriented.

The active material layer of the negative electrode includes a carbon-based negative electrode active material, and the active material layer of the negative electrode has a DD (Degree of Divergence) value defined by Equation 1 below, and the DD value may be equal to about 30 or more. Equation 1: $DD \left(Degree of Divergence\right) = \left(Ia/Itotal\right) \times 100 .$

In Equation 1, Ia is a sum of peak intensities appearing at a non-planar angle during XRD measurement using CuKα ray, and Itotal is a sum of peak intensities appearing at all angles during XRD measurement using CuKα ray.

An electrode assembly according to another example embodiment of the present disclosure includes a negative electrode, a positive electrode, and a separator positioned between the positive electrode and the negative electrode. The negative electrode includes a substrate, a first active material layer and a second active material layer laminated on the substrate, and the porosity of the first active material layer may be greater than the porosity of the second active material layer.

The porosity of the first active material layer may be in a range of about 15% to about 18%, and the porosity of the second active material layer may be in a range of about 10% to about 12%.

The first active material layer may include a first active material in which artificial graphite and silicon particles are mixed, and the second active material layer may include a second active material including natural graphite.

The first active material and the second active material of the first active material layer may be mixed in a ratio that is different from the ratio of the first active material to the second active material of the second active material layer.

The first active material and the second active material of the first active material layer may be mixed in a ratio of about 25:75.

The first active material layer and the second active material layer may be oriented.

In the present disclosure, by forming pores in the active material layer, a high-capacity negative electrode for a rechargeable battery and an electrode assembly may be provided by reducing or minimizing crack occurrence due to volume expansion while using silicon.

### BRIEF DESCRIPTION OF THE DRAWINGS

The following drawings attached to this specification illustrate example embodiments of the present disclosure and serve to further understand the technical features of the present disclosure together with the detailed description of the disclosure to be described below, and therefore, the present disclosure should not be interpreted as being limited to only the matters described in such drawings.
FIG. 1 is a schematic perspective view of a rechargeable battery according to one example embodiment of the present disclosure.
FIG. 2 is a schematic cross-sectional view of the stacked electrode assembly included in FIG. 1.
FIG. 3 is a diagram for explaining orientation of a negative active material.

### DETAILED DESCRIPTION

Example embodiments of the present disclosure are described in detail below with reference to the accompanying drawings. Terms or words used in the present specification and claims shall not be interpreted as being limited to common or dictionary meanings. Instead, based on the principle that the inventor may appropriately define the concepts of terms in order to describe his/her own disclosure in the best way, such terms or words shall be interpreted as having meanings and concepts consistent with the technical features of the present disclosure. Therefore, it should be understood that the configurations shown in the example embodiments and drawings described in this specification are merely some of the example embodiments of the present disclosure and do not represent all the technical features of the present disclosure, and thus various equivalents and modifications that may replace the example embodiments at the time of the present application may exist.

In addition, when used in this specification, "include, include" and/or "including, including" specifies the presence of mentioned shapes, numbers, steps, operations, members, elements and/or groups thereof, and does not exclude the presence or addition of one or more other shapes, numbers, operations, members, elements and/or groups.

In addition, to help understand the disclosure, dimensions of some components may be exaggerated rather than shown to actual scale in the attached drawings. Also, the same reference numbers may be assigned to the same components in different example embodiments.

Although first, second, and the like, are used to describe various components, it is to be understood that these components are not limited by these terms. These terms are used only to distinguish one component from another, and unless specifically stated otherwise, it is to be understood that the first component may also be the second component.

Throughout the specification, unless specifically stated otherwise, each component may be singular or plural.

Spatially relative terms such as "beneath", "below", "lower", "above", "upper", and the like may be used herein for ease of description to describe the relationship of one element or feature to another element(s) or feature(s) as shown in the drawings. Spatially relative positions are understood to encompass different orientations of the device in use or operation in addition to the orientation depicted in the figures. For example, if (when) the device in the drawings is turned over, elements described as "below" or "beneath" other elements would then be understood as "above" or "upper" the other elements. Thus, the term "below" may encompass both an orientation of above and below.

Furthermore, when an element is described as being "connected to" or "coupled to" another element, the elements may be directly connected to each other or directly connected to each other, but it should be understood that another element may be "interposed" between each element, or each element may be "connected," "coupled," or "connected" through another element.

Unless otherwise defined in this specification, a particle size may be an average particle diameter. In addition, the particle size refers to an average particle diameter (D50) which means a diameter of particles having a cumulative volume of 50 volume% in a particle size distribution. The average particle diameter (D50) may be measured by a method widely known to those skilled in the art, for example, by a particle size analyzer, or by a Transmission Electron Microscope (TEM) photograph or a Scanning Electron Microscope (SEM) photograph. As another method, measurement may be performed using a measurement device utilizing dynamic light-scattering, and after performing data analysis to count the number of particles for each particle size range, the average particle diameter (D50) value may be obtained based on the count. Alternatively, the average particle diameter (D50) value may be measured using a laser diffraction method. For example, when measured by the laser diffraction method, after dispersing the particles to be measured in a dispersion medium, the particles are introduced into a commercially available laser diffraction particle size measuring device (for example, Microtrac MT 3000) and irradiated with ultrasonic waves of about 28 kHz at an output of 60 W, and then the average particle diameter (D50) based on a 50% criterion of the particle size distribution in the measuring device may be calculated.

In one example embodiment, the average particle diameter may be measured by the various methods described above, for example, through a particle size analyzer.

In one example embodiment, the thickness may be measured by a SEM or TEM image of a cross-section, but is not limited thereto, and may be measured by any method capable of measuring thickness in the field. The thickness may be an average thickness.

In this specification, soft carbon refers to a graphitizable carbon material that may be graphitized by heat treatment at a high temperature, for example, about 2800°C, and hard carbon refers to a non-graphitizable carbon material that is not graphitized by heat treatment. Soft carbon and hard carbon are well known in the art.

In one example embodiment, crystalline carbon and amorphous carbon may be classified by X-ray diffraction analysis. The crystalline carbon includes natural graphite and artificial graphite. Natural graphite refers to naturally occurring graphite obtained by separation from minerals, and having a d002 of 3.350 Å to 3.360 Å in X-ray diffraction analysis; and artificial graphite refers to graphite produced by graphitization, and having a d002 of 3.355 Å to 3.365 Å in X-ray diffraction analysis. Amorphous carbon has a d002 of 3.34 Å or less in X-ray diffraction analysis. The X-ray diffraction (XRD) analysis may be performed using a CuKα ray as a target ray and an X-ray diffractometer, for example, X'Pert (manufacturer: Malvern Panalytical), and a monochromator device may be removed for measurement in order to improve peak intensity resolution. Measurement conditions may be 2θ = 10° to 80°, scan speed (°/S) = 0.044 to 0.089, and step size (°/step) = 0.013 to 0.039.

In one example embodiment, weight average molecular weight may be measured by, e.g., gel permeation chromatography.

The terminology used herein is for the purpose of describing example embodiments and is not intended to be limiting of the present disclosure.

When the terms "about" or "substantially" are used in this specification in connection with a numerical value, it is intended that the associated numerical value include a tolerance of +10% around the stated numerical value. When ranges are specified, the range includes all values therebetween such as increments of 0.1%.

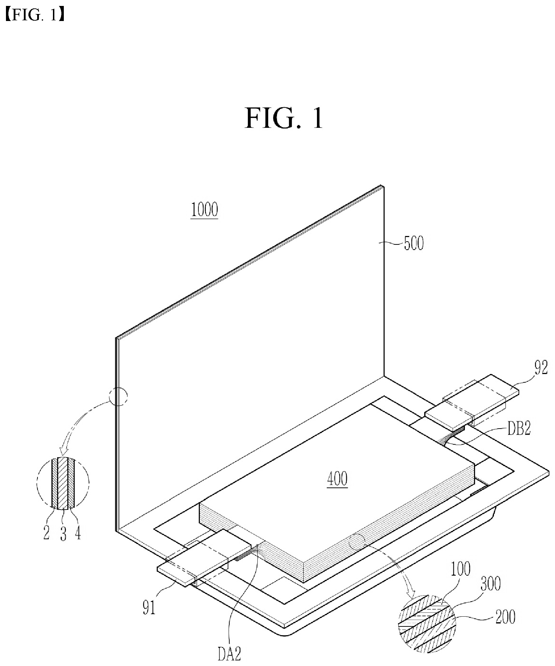

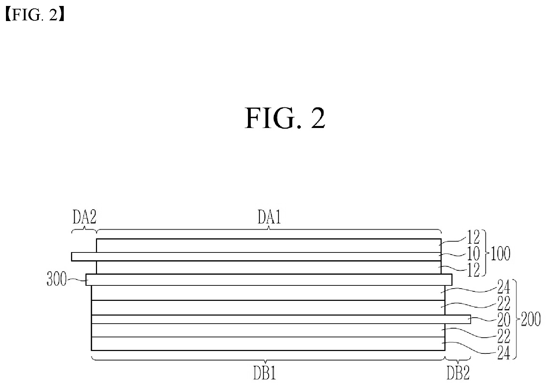

FIG. 1 is a schematic perspective view of a rechargeable battery according to one example embodiment of the present disclosure, and FIG. 2 is a schematic cross-sectional view of the stacked electrode assembly of the rechargeable battery shown in FIG. 1.

As shown in FIG. 1 and FIG. 2, a rechargeable battery (1000) according to one example embodiment of the present disclosure includes an electrode assembly (400) and a case (500) accommodating the electrode assembly (400) and an electrolyte (not shown).

The electrode assembly (400) is a stacked electrode assembly (400) in which a positive electrode (100) and a negative electrode (200) are repeatedly laminated with a separator (300) interposed therebetween. For convenience of description, one positive electrode (100), one negative electrode (200), and one separator (300) are shown in FIG. 2.

The positive electrode (100) includes a positive electrode substrate (10) and an active material layer (12) formed on the positive electrode substrate (10). The positive electrode substrate (10) is formed of or include a thin conductive metal foil and used as a current collector, and may be or include, for example, aluminum.

The positive electrode substrate (10) includes an electrode active portion (DA1) where the positive electrode active material layer (12) is formed, and an electrode uncoated region where the active material layer (12) is not formed, thereby exposing the positive electrode substrate (10). The positive electrode substrate (10) provides a movement path for charges generated in the positive electrode active material layer (12) and supports the positive electrode active material layer (12).

The electrode uncoated region may be located around the electrode active portion (DA1) and may have a form extended from the electrode active portion (DA1).

As illustrated in FIG. 1 and FIG. 2, a portion of the electrode uncoated region protruding from one side of the electrode active portion (DA1) may be connected to a positive electrode tab (91) for drawing out current to the outside, and the positive electrode tab (91) may be made of or include the same material as the substrate, for example, aluminum. Hereinafter, for convenience of description, the protruding form of the electrode uncoated region to which the positive electrode tab (91) is connected is referred to as a tab uncoated region (DA2). The tab uncoated regions (DA2) of the repeatedly laminated positive electrodes (100) may be electrically connected through welding or the like.

The positive electrode active material layer (12) may be formed on one surface (not shown), or on both surfaces, of the positive electrode substrate (10), respectively. The positive electrode active material layer (12) includes a positive active material, and may further include a binder and/or a conductive material. The positive electrode may further include an additive that may constitute a sacrificial positive electrode.

A content of the positive active material may be in a range of about 90 wt% to about 99.5 wt% based on the total weight of the positive electrode active material layer, and a content of the binder and the conductive material may be in a range of about 0.5 wt% to about 5 wt%, respectively, based on the total weight of the positive electrode active material layer.

### Positive active material

As the positive active material, a compound capable of reversible intercalation and deintercalation of lithium (lithiated intercalation compound) may be used. For example, one or more types of complex oxides of lithium and a metal such as or including at least one of cobalt, manganese, nickel, and combinations thereof may be used.

The composite oxide may be or include a lithium transition metal composite oxide, and examples thereof include at least one of lithium nickel-based oxide, lithium cobalt-based oxide, lithium manganese-based oxide, lithium iron phosphate-based compound, cobalt-free nickel-manganese-based oxide, or combinations thereof.

As an example, a compound represented by any one of the following chemical formulas may be used. LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); LiaFePO4 (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

As an example, the positive electrode active material may be or include a high-nickel-based positive electrode active material in which a content of nickel is about 80 mol% or more, 85 mol% or more, 90 mol% or more, 91 mol% or more, or 94 mol% or more and 99 mol% or less with respect to 100 mol% of metals excluding lithium in the lithium transition metal composite oxide. High-nickel-based positive electrode active materials may achieve high capacity, and thus may be applied to high-capacity, high-density lithium rechargeable batteries.

### Binder

The binder effectively attaches positive active material particles to each other, and effectively attaches the positive active material to the substrate (or current collector). Representative examples of the binder include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

### Conductive material

The conductive material imparts conductivity to the electrode, and any electronically conductive material may be used in the configured battery as long as the electronically conductive material does not cause adverse chemical changes in the battery. Examples of the conductive material include carbon-based materials such as at least one of natural graphite, artificial graphite, carbon black, acetylene black, ketjen black, carbon fiber, carbon nanofiber, and carbon nanotube; metal-based materials containing at least one of copper, nickel, aluminum, silver, and the like, in the form of metal powder or metal fiber; conductive polymers such as polyphenylene derivatives; or mixtures thereof.

The negative electrode (200) includes a negative electrode substrate (20) and negative active material layers (22, 24) formed on the negative electrode substrate (20). The negative electrode substrate (20) is formed of or include a thin conductive metal foil and used as a current collector, and for example, at least one of copper foil, nickel foil, stainless steel foil, titanium foil, nickel foam, copper foam, a polymer substrate coated with a conductive metal, and combinations thereof, may be used.

The negative electrode substrate (20) includes an electrode active portion (DB1) where the negative active material layers (22, 24) are formed, and an electrode uncoated region where the negative active material layers (22, 24) are not formed and the negative electrode substrate (20) is exposed. The negative electrode substrate (20) provides a movement path for charges generated in the negative active material layers (22, 24) and supports the negative active material layers (22, 24).

The electrode uncoated region may be located around the electrode active portion (DB1), and may have a form extended from the electrode active portion (DB1).

As illustrated in FIG. 1 and FIG. 2, a negative electrode tab (92) for drawing out current to the outside may be connected to a portion of the electrode uncoated region protruding from one side of the electrode active portion (DB1). Hereinafter, for convenience of description, the protruding form of the electrode uncoated region to which the negative electrode tab (92) is connected is referred to as a tab uncoated region (DB2). The tab uncoated regions (DB2) of the repeatedly laminated negative electrodes (200) may be electrically connected through welding or the like.

Although it is shown that the tab uncoated regions (DA2, DB2) of the positive electrode and the negative electrode protrude in opposite directions, the present disclosure is not limited thereto, and the tab uncoated regions (DA2, DB2) may protrude (not shown) in the same direction, with the positive electrode and the negative electrode spaced apart from each other.

The negative active material layer may be formed on one surface (not shown), or on both surfaces of the substrate, respectively. A content of the negative active material in the negative active material layer may be in a range of about 95 wt% to about 99 wt% with respect to the total weight of the negative active material layer.

### Negative active material

The negative active material includes a first active material and a second active material capable of reversibly intercalating/deintercalating lithium ions, and a third active material capable of being doped and dedoped with lithium.

The first active material and the second active material are or include carbon-based negative electrode active materials, and may be or include, for example, crystalline carbon, and examples of crystalline carbon may be amorphous, plate-like, flake, spherical, or fibrous graphite. In this case, the first active material may be or include artificial graphite and the second active material may be or include natural graphite.

The first active material may further include a Si-based negative active material. The Si-based negative active material may be or include at least one of silicon, a silicon-carbon composite, silicon oxide (SiOx, 0<x≤2), a Si-Q alloy (Q is or includes at least one of alkali metals, alkaline earth metals, group 13 elements, group 14 elements (excluding Si), group 15 elements, group 16 elements, transition metals, rare earth elements, and combinations thereof), or combinations thereof. The Sn-based negative electrode active material may be or include at least one of Sn, SnO2, a Sn-based alloy, or combinations thereof.

The silicon-carbon composite may be or include a composite of silicon and amorphous carbon. According to one example embodiment, the silicon-carbon composite may be in a form in which silicon particles are coated with amorphous carbon on surfaces of the silicon particles. For example, the silicon-carbon composite may include secondary particles (core) in which silicon primary particles are assembled, and an amorphous carbon coating layer (shell) located on surfaces of the secondary particles. The amorphous carbon may also be located between the silicon primary particles, so that, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer located on a surface of the core.

### Binder

The binder attaches negative active material particles to each other, and also attaches the negative active material to the substrate (or current collector). As the binder, a non-aqueous binder, a water-based binder, a dry binder, or a combination thereof may be used.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide-imide, polyimide, or combinations thereof.

The water-based binder may be or include at least one of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, ethylene propylene diene copolymer, polyvinylpyridine, chlorosulfonated polyethylene, latex, polyester resin, (meth)acrylic resin, phenolic resin, epoxy resin, polyvinyl alcohol, and combinations thereof.

When a water-based binder is used as the negative electrode binder, the water-based binder may further include a cellulose-based compound capable of imparting viscosity. As the cellulose-based compound, one or more types of carboxymethyl cellulose, hydroxypropylmethyl cellulose, methyl cellulose, or alkali metal salts thereof, and the like, may be mixed together. As the alkali metal, at least one of Na, K or Li may be used.

The dry binder is a polymer material capable of fiberization, and may be or include, for example, at least one of polytetrafluoroethylene, polyvinylidene fluoride, polyvinylidene fluoride-hexafluoropropylene copolymer, polyethylene oxide, or combinations thereof.

### Conductive material

The conductive material imparts conductivity to the electrode, and any electronically conductive material may be used in the configured battery as long as the electronically conductive material does not cause adverse chemical changes in the battery. Examples may include carbon-based materials such as at least one of natural graphite, artificial graphite, carbon black, acetylene black, ketjen black, carbon fiber, carbon nanofiber, and carbon nanotube; metal-based materials including at least one of copper, nickel, aluminum, silver, and the like, in the form of metal powder or metal fiber; conductive polymers such as polyphenylene derivatives; or mixtures thereof.

Meanwhile, the first active material layer (22) may include an active material that is different from the material of the second active material layer (24). Different active materials may include not only those made of different materials, but also a configuration including the same materials mixed in different ratios.

The first active material may further include silicon together with artificial graphite, and the silicon included in the first active material may be in a range of about 6 wt% to about 10 wt% with respect to the total weight of the active materials of the first active material layer (22) and the second active material layer (24), and may be included in the same proportion in the first active material layer (22) and in the second active material layer (24).

A ratio of the first active material to the second active material of the first active material layer (22) may be in a range of about 25%:75%.

The second active material layer (24) may include the first active material and the second active material in a different ratio from the first active material layer (22), but is not limited thereto, and may be made of or include different negative active materials. The second active material layer (24) may further include a third active material other than artificial graphite, silicon, and natural graphite, which are referred to as the first active material and the second active material, or may consist only of silicon and the third active material.

The third active material may be or include amorphous carbon, and may be or include, for example, at least one of soft carbon or hard carbon, mesophase pitch carbon, calcined coke, and the like.

Meanwhile, porosities of the first active material layer (22) and the second active material layer (24) may be different from each other.

Porosity refers to a ratio of volume occupied by pores to the volume of the active material layer. Measurement of porosity may be performed using, for example, a nitrogen adsorption method, or a mercury intrusion method. Alternatively, porosity may be measured using, e.g., gas and BELSORP (BET equipment) from BEL JAPAN, or may be measured through an image analysis method such as FE-SEM after staining a specific component, such as a binder, in the electrode with a dye.

The porosity of the first active material layer (22) may be in a range of about 15% to about 18%.

Porosity may be obtained by varying the particle sizes of artificial graphite, silicon, and natural graphite included in the first active material and the second active material, and adjusting the mixing ratio.

The size may increase in the order of natural graphite, artificial graphite, and silicon. For example, a particle size (D50) of natural graphite may be about 7 µm or less, a particle size of artificial graphite may be in a range of about 11 µm to about 15 µm, and a particle size of silicon may be about 20 µm or less.

The porosity of the second active material layer (24) may be smaller than the porosity of the first active material layer (22), and the second active material layer (24) may have a porosity in a range of, for example, about 10% to about 12%.

As described above, the active material of the second active material layer (24) may be different from the active material of the first active material layer (22). When the second active material layer (24) includes the first active material and the second active material, the second active material layer (24) may include natural graphite, artificial graphite, and silicon having the same particle size as the active material of the first active material layer (22), and may be mixed in a ratio that is different from the ratio of the active material of the first active material layer (22).

For capacity increase and uniform, or substantially uniform, expansion, silicon may be included in the first active material layer (22) and the second active material layer (24) in the same particle size and ratio. In this case, the particle size of silicon may be about 20 µm or less.

Regarding volume expansion during charging and discharging, cracking and deformation of the active material layer may occur more significantly in a portion closer to the substrate. That is, volume expansion in the first active material layer (22) may be transmitted to the second active material layer (24), so that the entire active material layer may be deformed. Therefore, in the present disclosure, by increasing the porosity of the first active material layer (22) located relatively below, the pores absorb the volume expansion caused by silicon so that stress is relaxed, thereby reducing volume expansion and cracks in the entire active material layer, which may reduce deformation of the electrode.

Meanwhile, the first active material layer (22) and the second active material layer (24) according to one example embodiment of the present disclosure may be oriented.

The first active material layer (22) and the second active material layer (24) may have a degree of divergence (DD) value defined by the following Equation 1. Equation 1: $DD \left(Degree of Divergence\right) = \left(Ia/Itotal\right) \times 100 .$

In the above Equation 1, Ia is a sum of peak intensities appearing at a non-planar angle during XRD measurement using CuKα ray, and Itotal is a sum of peak intensities appearing at all angles during XRD measurement using CuKα ray.

In this case, the non-planar angle, when measured by XRD using CuKα ray, exhibits 20 values of 42.4±0.2°, 43.4±0.2°, 44.6±0.2°, and 77.5±0.2°, which correspond to the (100) plane, (101)R plane, (101)H plane, and (110) plane, respectively. In general, graphite is classified into a hexagonal structure and a rhombohedral structure having an ABAB type stacking sequence according to the stacking sequence of graphene layers, and the R plane refers to a rhombohedral structure, and the H plane refers to a hexagonal structure.

In addition, the all angles refer to 2θ = 26.5+0.2°, 42.4+0.2°, 43.4+0.2°, 44.6+0.2°, 54.7±0.2°, and 77.5+0.2° during XRD measurement using CuKα ray, that is, it indicates the (002) plane, (100) plane, (101)R plane, (101)H plane, (004) plane, and (110) plane. The peak appearing at 20 = 43.4±0.2° may be seen as resulting from the overlap of a peak corresponding to the (101)R plane of the carbon-based material and a peak corresponding to the (111) plane of the current collector, for example, Cu.

In general, a peak intensity value refers to a height value of a peak or an integrated area value of a peak, and a peak intensity value according to one example embodiment refers to an integrated area value of a peak.

In one example embodiment of the present disclosure, XRD measurement was performed using a CuKα ray as a target ray. To improve peak intensity resolution, the target ray was extracted using a monochromator device, and the measurement was then performed. Additionally, at this time, the measurement was performed under conditions where 2θ was from in a range of about 10° to about 80°, the scan speed (°/S) was in a range from about 0.044 to about 0.089, and the step size was about 0.026°/step.

A DD value according to an example embodiment of the present disclosure is a value obtained by performing XRD on a negative electrode obtained by disassembling a battery in a fully discharged state after charging and discharging a lithium rechargeable battery including the negative electrode. In this case, the charge and discharge conditions were carried out 1 to 2 times at a range of about 0.1C to about 0.2C.

The negative electrode may have a peak intensity ratio of the (004) plane to the peak intensity of the (002) plane, that is, I(004)/I(002), of 0.04 or more, and may be about 0.04 or more and about 0.07 or less during XRD measurement using CuKα ray. When I(004)/I(002) of the negative electrode is about 0.04 or more, DC internal resistance is not increased, rate capability, especially high-rate capability, may be improved, and cycle life characteristics may be improved.

Such a DD value is a physical property value that is maintained even when charging and discharging proceed, and represents the degree to which negative active materials are oriented at a given angle. For convenience of description, carbon-based active materials, for example, graphite particles, are shown as negative active materials in the drawings.

A DD value according to an example embodiment of the present disclosure may be equal to about 30 or more, and may be about 30 or more and about 60 or less. When the DD value is about 30 or more, it means that the negative active material is not lying horizontally to one surface of the substrate, but is sufficiently oriented to facilitate movement of Li ions within the negative electrode.

Such orientation may be achieved using a magnetic field.

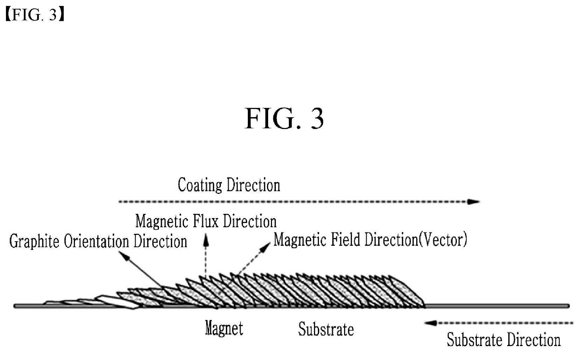

FIG. 3 is a diagram illustrating orientation of a negative active material.

Referring to FIG. 3, after applying a negative active material on a substrate, the negative active material is oriented using a magnetic field. As the negative active material, only graphite is shown as a representative example.

A magnet according to one example embodiment of the present disclosure is an electromagnet, and a magnetic field may be readily applied or removed as needed. At this time, the degree of orientation may be controlled by adjusting the strength of the magnetic field, the exposure time of the magnetic field, and the viscosity of the negative active material composition.

After positioning a substrate made of or including Cu foil for a negative electrode on top of a magnet, a negative active material slurry may be applied on the substrate and exposed to a magnetic field. In this case, the DD value of the active material layer formed by being exposed to the magnetic field may be about 30 or more.

Referring to FIG. 3, the negative electrode may be formed by continuously coating a negative electrode active material while moving a negative electrode substrate. At this time, a magnetic flux generated by a magnet may be formed in a direction perpendicular to the negative electrode substrate, or a direction in which the magnetic flux is formed may have a given angle as a vector function depending on a coating speed (i.e., a moving speed of the negative electrode substrate). Accordingly, the negative electrode active material in the active material layer may have a shape in which the negative electrode active material stands at a given angle with respect to a surface of the negative electrode substrate, that is, the negative electrode active material is oriented.

Again, referring to FIG. 1 and FIG. 2, the separator (300) may include a porous substrate and a coating layer located on one surface or on both surfaces of the porous substrate, and including an organic material, an inorganic material, or a combination thereof.

The porous substrate may be or include a polymer membrane formed of or including any one polymer such as or including at least one of polyolefins such as polyethylene and polypropylene, polyesters such as polyethylene terephthalate and polybutylene terephthalate, polyacetal, polyamide, polyimide, polycarbonate, polyetherketone, polyaryletherketone, polyetherimide, polyamide-imide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more of these.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but the inorganic material is not limited thereto.

The organic material and the inorganic material may exist as a mixture in one coating layer, or a coating layer containing the organic material and a coating layer containing the inorganic material may exist in a laminated form.

The electrode assembly (400) together with an electrolyte may be accommodated in a pouch type case (500) or a prismatic case in the form of a can (not shown) and used as a rechargeable battery, and the electrolyte includes a non-aqueous organic solvent and a lithium salt.

The non-aqueous organic solvent constitutes a medium through which ions involved in the electrochemical reaction of the battery may move.

The non-aqueous organic solvent may be or include at least one of a carbonate-based, ester-based, ether-based, ketone-based, or alcohol-based solvent, an aprotic solvent, or a combination thereof.

As the carbonate-based solvent, at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like may be used.

As the ester-based solvent, at least one of methyl acetate, ethyl acetate, n-propyl acetate, dimethyl acetate, methyl propionate, ethyl propionate, decanolide, mevalonolactone, valerolactone, caprolactone, and the like may be used.

As the ether-based solvent, at least one of dibutyl ether, tetraglyme, diglyme, dimethoxyethane, 2-methyltetrahydrofuran, 2,5-dimethyltetrahydrofuran, tetrahydrofuran, and the like may be used.

In addition, as the ketone-based solvent, cyclohexanone and the like may be used. As the alcohol-based solvent, ethyl alcohol, isopropyl alcohol, and the like may be used. As the aprotic solvent, at least one of nitriles such as R-CN (R is a linear, branched, or cyclic hydrocarbon group having a range of 2 carbon atoms to about 20 carbon atoms and may include a double bond, an aromatic ring, or an ether group); amides such as dimethylformamide; dioxolanes such as 1,3-dioxolane and 1,4-dioxolane; sulfolanes, and the like may be used.

The non-aqueous organic solvent may be used alone or in a mixture of two or more types.

In addition, when a carbonate-based solvent is used, a cyclic carbonate and a linear carbonate may be mixed together, and the cyclic carbonate and the linear carbonate may be mixed in a volume ratio in a range of about 1:1 to about 1:9.

The lithium salt dissolves in an organic solvent and constitutes a source of lithium ions in the battery to enable basic operation of a lithium rechargeable battery, and promotes movement of lithium ions between the positive electrode and the negative electrode. Representative examples of the lithium salt may include one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)2N (lithium bis(fluorosulfonyl)imide (LiFSI)), LiC₄F₉SO₃, LiN(CₓF₂ₓ+1SO₂)(C_{y}F_{2y}+1SO₂) (x and y are integers in a range of 1 to about 20), lithium trifluoromethane sulfonate, lithium tetrafluoroethanesulfonate, lithium difluorobis(oxalato)phosphate (LiDFOB), and lithium bis(oxalate) borate (LiBOB).

The case (500) is a pouch type and may be formed of or include a laminate exterior material, and the laminate exterior material may be formed of or include a multilayer structure having, for example, a first insulating layer (2), a metal layer (3), and a second insulating layer (4). Various other adhesive layers or functional layers may be further added.

The first insulating layer (2) is formed as the inner surface of the laminate exterior material from a material having insulation and thermal adhesive properties, and may be sealed by heat-sealing the edges in a state in which the electrode assembly (400) is accommodated. In addition, the first insulating layer (2) is formed on one surface of the metal layer (3) and forms the inner surface of the laminate exterior material facing the electrode assembly (400). The first insulating layer (2) may be formed of or include casted polypropylene (CPP) or an equivalent thereof that does not react with the electrolyte.

As such, in the present disclosure, by adjusting the particle sizes of the first active material layer (22) and the second active material layer (24) of the negative electrode to make the porosity of the first active material layer (22) greater than the porosity of the second active material layer (24), even if (when) silicon is included to realize high capacity, cracks in the active material layer due to volume expansion are alleviated, and thus a rechargeable battery with improved electrical characteristics such as lifetime retention may be provided.

Comparative Examples and Examples of the present disclosure are described below. The following examples are only one example embodiment of the present disclosure, and the present disclosure is not limited to the following examples.

### Example 1

An active material was prepared by mixing a first active material including artificial graphite having a particle size (D50) of 15 µm and silicon having a particle size of 20 µm, and a second active material including natural graphite having a particle size of 7 µm in a ratio of 25 wt%: 75 wt%, and was coated on a substrate with a compaction density of 1.6 g/cc to form a first active material layer.

Then, an active material was prepared by mixing a first active material including artificial graphite having a particle size of 15 µm and silicon having a particle size of 20 µm, and a second active material including natural graphite having a particle size of 7 µm in a ratio of 75 wt%: 25 wt%, and was coated on the first active material layer with an electrode density of 1.6 g/cc to form a second active material layer.

The lithium rechargeable battery shown in FIG. 1 was manufactured in a conventional method, incorporating the manufactured negative electrode.

### Example 2

The active material was manufactured in the same manner as in Example 1, except that the size of artificial graphite was 11 µm.

### Example 3

The active material was manufactured in the same manner as in Example 2, except that the mixture density was 1.65.

### Comparative Example 1

The active material was manufactured in the same manner as in Example 1, except that the size of natural graphite was 16 µm.

### Comparative Example 2

The active material was manufactured in the same manner as in Example 1, except that the size of artificial graphite was 16 µm.

### Comparative Example 3

The active material was manufactured in the same manner as in Example 1, except that the ratio of the first active material to the second active material was 65:35.

The lifetime retention characteristics and swelling ratios of Examples 1 to 3 and Comparative Examples 1 to 3 were measured and are shown in Table 1 below.

### Evaluation Example 1: Lifetime retention (%) measurement

The lithium rechargeable batteries manufactured in Examples 1 to 3 and Comparative Examples 1 to 3 were charged at 25°C at a constant current of 0.33 C until 4.25 V was reached, and then charged once at a constant voltage of 4.3 V until the charging current reached 0.05 C (charging cut-off 0.05C). After that, after leaving the lithium rechargeable batteries for 30 minutes, the lithium rechargeable batteries were discharged once at a constant current of 0.33 C until 2.8 V to measure discharge capacity. This was referred to as one cycle, and after performing 100 cycles, lifetime retention was measured.

The lifetime retention rate (%) was calculated by the following Equation 2. Equation 2: 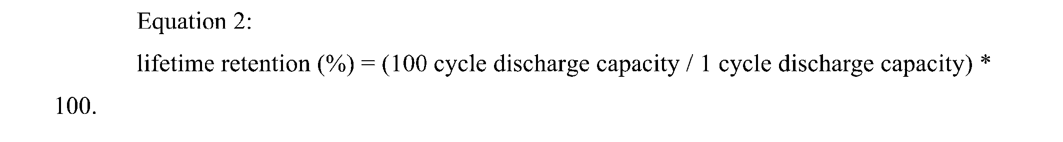 lifetime retention (%) = (100 cycle discharge capacity / 1 cycle discharge capacity) * 100.

### Evaluation Example 2: Swelling ratio (%) measurement

The swelling ratio (%) was calculated by the following Equation 3. Equation 3: 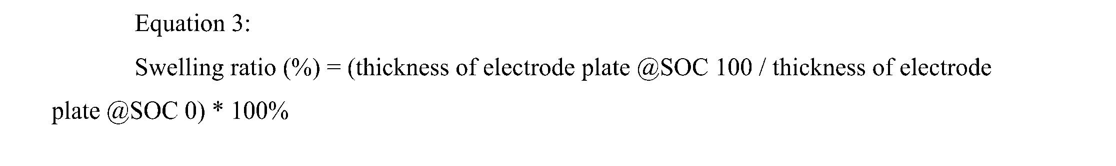 Swelling ratio (%) = (thickness of electrode plate @SOC 100 / thickness of electrode plate @SOC 0) * 100%

**Table 1:**

| Item | Graphite Ratio Of First Active Material Layer | | | | Mixture Density (g/cc) | Porosity (%) | Swelling Ratio (%, @ 100CYC) | Lifetime Retention Rate (%, @ 100CYC) |
|---|---|---|---|---|---|---|---|---|
| | Artificial Graphite Ratio (%) | Artificial Graphite D 50 (µm) | Natural Graphite Ratio (%) | Natural Graphite D 50 (µm) | | | | |
| Example 1 | 25 | 15 | 75 | 7 | 1.6 | 15.21 | 8.5 | 95 |
| Example 2 | 25 | 11 | 75 | 7 | 1.6 | 17.98 | 6.5 | 99.8 |
| Example 3 | 25 | 11 | 75 | 7 | 1.65 | 15.44 | 8.5 | 89 |
| Comparative Example 1 | 25 | 15 | 75 | 16 | 1.6 | 10.57 | 9 | 84.6 |
| Comparative Example 2 | 25 | 16 | 75 | 7 | 1.6 | 13.82 | 9 | 89 |
| Comparative Example 3 | 65 | 15 | 35 | 7 | 1.6 | 11.87 | 10 | 90 |

Referring to Table 1, it can be seen that the porosity of the first active material layer of Examples 1 to 3 is 15% or more, which is significantly larger than the 14% or less porosity of Comparative Examples 1 to 3. It can be seen that Examples 1 to 3 have a swelling ratio of 8.5% or less, which is smaller than the 9% or more swelling ratio of Comparative Examples 1 to 3. In particular, it can be seen that Example 2 has a swelling ratio of 6.5%, which is significantly less expanded compared to the swelling ratio of 10% for Comparative Example 3.

It can be seen that Examples 1 and 2 have a lifetime retention rate of 95% or more, which is improved compared to Comparative Examples 1 to 3. Example 3 and Comparative Example 3 have similar values for the lifetime retention rate, but Comparative Example 3 has a larger swelling ratio than Example 3, so the probability of crack occurrence may increase.

Although example embodiments of the present disclosure have been described above, the present disclosure is not limited thereto, and various modifications may be made and implemented within the scope of the claims, the detailed description of the disclosure, and the attached drawings, and this also naturally falls within the scope of the present disclosure.

## Claims

1. A negative electrode for a rechargeable battery, the negative electrode comprising:
a substrate;
a first active material layer formed on the substrate; and
a second active material layer formed on the first active material layer;
wherein a porosity of the first active material layer is greater than a porosity of the second active material layer.

2. The negative electrode for a rechargeable battery as claimed in claim 1, wherein:
the porosity of the first active material layer is in a range of about 15% to about 18%, and
the porosity of the second active material layer is in a range of about 10% to about 12%.

3. The negative electrode for a rechargeable battery as claimed in claim 1 or 2, wherein:
the first active material layer and the second active material layer each comprise a first active material and a second active material,
the first active material is formed by mixing artificial graphite and silicon particles, and
the second active material includes natural graphite.

4. The negative electrode for a rechargeable battery as claimed in any of the claims 1 to 3, wherein a ratio of the first active material to the second active material in the first active material layer is different from a ratio of the first active material to the second active material in the second active material layer.

5. The negative electrode for a rechargeable battery as claimed any of the claims 1 to 4, wherein the first active material and the second active material of the first active material layer are mixed in a ratio of about 25:75.

6. The negative electrode for a rechargeable battery as claimed any of the claims 1 to 5, wherein the particle size of the artificial graphite is in a range of about 11 µm to about 15 µm.

7. The negative electrode for a rechargeable battery as claimed any of the claims 1 to 6, wherein the particle size of the natural graphite is about 7 µm or less.

8. The negative electrode for a rechargeable battery as claimed in any of the claims 1 to 7, wherein the particle size of the silicon particles is about 20 µm or less.

9. The negative electrode for a rechargeable battery as claimed in any of the claims 1 to 8, wherein the first active material layer of a negative electrode for a rechargeable battery is formed with a mixture density in a range of about 1.60 g/cc to about 1.65 g/cc.

10. The negative electrode for a rechargeable battery as claimed in any of the claims 1 to 9, wherein the first active material layer and the second active material layer are oriented.

11. The negative electrode for a rechargeable battery as claimed in any of the claims 1 to 10, wherein:
the active material layer of the negative electrode comprises a carbon-based negative electrode active material, and
the active material layer of the negative electrode has a DD (Degree of Divergence) value defined by Equation 1, and wherein the DD value is equal to about 30 or more; Equation 1: $DD \left(Degree of Divergence\right) = \left(Ia/Itotal\right) \times 100 ;$
wherein:
Ia is a sum of peak intensities appearing at a non-planar angle during XRD measurement using CuKα ray; and
Itotal is a sum of peak intensities appearing at all angles during XRD measurement using CuKα ray.

12. An electrode assembly, comprising:
a negative electrode;
a positive electrode; and
a separator positioned between the positive electrode and the negative electrode,
the negative electrode comprising a substrate, and a first active material layer and a second active material layer stacked on the substrate, and
wherein a porosity of the first active material layer is greater than a porosity of the second active material layer.

13. The electrode assembly as claimed in claim 12, wherein:
the porosity of the first active material layer is in a range of about 15% to about 18%, and
the porosity of the second active material layer is in a range of about 10% to about 12%.

14. The electrode assembly as claimed in claim 12 or 13, wherein:
the first active material layer and the second active material layer each comprise a first active material and a second active material,
the first active material is formed by mixing artificial graphite and silicon particles, and
the second active material is an electrode assembly including natural graphite.
and/or a ratio of the first active material to the second active material in the first active material layer is different from a ratio of the first active material to the second active material in the second active material layer.

15. The electrode assembly as claimed in any of the claims 12 to 15, wherein the first active material and the second active material of the first active material layer are mixed in a ratio of about 25:75 and/or the first active material layer and the second active material layer are oriented.
